# EUROPÄISCHE PATENTSCHRIFT

(11) **EP 1 285 185 B1**
(45) Veröffentlichungstag und Bekanntmachung des Hinweises auf die Patenterteilung: **08.02.2006**
(21) Anmeldenummer: 01947255.4
(22) Anmeldetag: 04.05.2001
(51) Int. Cl.: F16H 61/02

(54) **VERFAHREN ZUR VERÄNDERUNG EINER DEFINIERTEN ADAPTIVEN FAHRSTRATEGIE**
METHOD FOR MODIFYING A DEFINED ADAPTIVE DRIVING STRATEGY
PROCEDE POUR MODIFIER UNE STRATEGIE DE CONDUITE ADAPTATIVE DEFINIE

(30) Priorität: 09.05.2000 DE 10022610
(43) Veröffentlichungstag der Anmeldung: 26.02.2003
(73) Patentinhaber: ZF FRIEDRICHSHAFEN Aktiengesellschaft, 88038 Friedrichshafen (DE)
(72) Erfinder: HENNEKEN, Markus, 88079 Kressbronn (DE); JAUCH, Friedemann, 88069 Tettnang (DE); HERBSTER, Kai-Uwe, 88046 Friedrichshafen (DE); SCHULER, Franz-Josef, 88079 Kressbronn (DE); MAUZ, Thomas, 88085 Langenargen (DE)
(86) Internationale Anmeldenummer: PCT/EP2001/005076
(87) Internationale Veröffentlichungsnummer: WO 2001/086175

(56) Entgegenhaltungen:
- EP-A- 0 638 742
- EP-A- 0 950 839
- DE-A- 19 752 623
- US-A- 5 157 609
- US-A- 5 467 277

## Beschreibung

Die vorliegende Erfindung betrifft ein Verfahren zur Veränderung einer definierten adaptiven Fahrstrategie, die in der Steueranordnung für ein Automatgetriebe eines Kraftfahrzeuges abgespeichert ist als Funktion einer Vielzahl einen bestimmten Fahrertyp und seinen Fahrstil charakterisierenden Parameter und einer Vielzahl das Kraftfahrzeug und seine Fahrt charakterisierenden Parameter.

Moderne Automatgetriebe für Kraftfahrzeuge passen sich durch eine adaptive Fahrstrategie an den Fahrstil des Fahrers an. Diese verbindet die Fahrertypbewertung mit der angepassten Auswahl von Gang- und Wandlerkupplungs-Schaltkennlinien mit zusätzlichen Funktionen, wie z. B. der Erkennung des Fahrwiderstandes, einer Stadtfahrt, einer spontanen Verzögerung und einer spontanen Beschleunigung des Fahrzeugs sowie den Zustand der Fahrbahn mit Niederreibwert, den Warmlauf und den Hochtemperaturbetrieb. Dadurch können ökonomische, d. h. verbrauchssparende Schaltkennlinien verwendet werden, wenn ein bequemer Fahrer erkannt wird. Weiter ist es möglich, einen sportlichen Fahrer sowie dazwischen liegende Fahrertypen zu erkennen. Die Zuordnung eines durch die adaptive Fahrstrategie erkannten Fahrertyps zu einem anderen Fahrer kann jedoch nicht mehr verändert werden. Ebenso wenig kann die zeitliche Abhängigkeit bei einem Wechsel von einem Fahrertyp zu einem anderen Fahrertyp verändert werden.

Bekannte Fahrstrategien bieten dem erkannten Fahrertyp eine definierten Fahrstrategie an, die in der Steueranordnung für das Automatgetriebe abgespeichert ist; so werden z. B. bei einem sportlichen Fahrer Gangschaltkennlinien bei höheren Drehzahlen verwendet.

Beispielsweise beschreibt die DE C 39 22 051 ein dem Oberbegriff des Anspruchs 1 entsprechendes Verfahren zur Steuerung eines Automatgetriebes, mit dem die Anpassung an das Fahrverhalten des Fahrers oder dessen verkehrssituationsbedingtes Handeln verbessert werden soll. Zu diesem Zweck ist die Brennkraftmaschine mittels eines Leistungssteuerorgans, beispielsweise eines Fahrpedals oder einer Drosselklappe, beeinflußbar, indem Gangstufen des Getriebes über Schaltprogramme, die von der Stellung des Leistungssteuerorganes und von der Motordrehzahl abhängig sind, automatisch geschaltet werden und ein der Stellung des Leistungssteuerorgans proportionales Signal zyklisch oder antizyklisch abgetastet wird. Aus dem abgetasteten Signalwert wird eine Fahraktivität ermittelt und zur Auswahl eines Schaltprogramms herangezogen. Neben dem abgetasteten Signalwert für das Leistungssteuerorgan wird ein weiterer Signalwert eines Betriebs- oder Fahrparameters des Kraftfahrzeuges, beispielsweise für die Fahrgeschwindigkeit, für die Querbeschleunigung, für die Längsbeschleunigung und/oder für die Längsverzögerung sowie für die Motordrehzahl zyklisch oder antizyklisch ermittelt, wonach die abgetasteten Signalwerte über von Betriebs- oder Fahrparametern des Kraftfahrzeuges beeinflußte Kennfelder in Werte primärer Kenngrößen umgewandelt werden, aus denen mittels einer Verknüpfungsfunktion ein Wert einer sekundären Kenngröße gewonnen und ein Wert einer ersten Fahraktivität einerseits aus der aktuell gewonnenen sekundären Kenngröße und aus dem Wert der aus einem Berechnungszeitraum zuvor ermittelten und abgespeicherten ersten Fahraktivität andererseits oder einer Anzahl zuvor gewonnener und abgespeicherter Werte der sekundären Kenngröße als gewichtete Summe ermittelt und zur Auswahl eines Schaltprogramms herangezogen wird.

Die Steuereinrichtung für das Automatgetriebe paßt sich damit ausgehend von einem verbrauchsoptimalen Schaltprogramm dynamisch an das Fahrverhalten und die gerade herrschenden Fahr- bzw. Verkehrssituationen an, ohne dass zusätzliche Bedienelemente betätigt werden müssen. Eine umfassende Manipulation der adaptiven Fahrstrategie, die die erfassten Signale beziehungsweise Signalwerte nach festen oder funktionell festgelegten kriterien bewertet, durch den Fahrer ist hierbei jedoch nicht vorgesehen.

Aufgabe der vorliegenden Erfindung ist es, ein Verfahren zu schaffen, mit dem einem anderen Fahrer als dem für die definierte adaptive abgespeicherte Fahrstrategie verantwortlichen Fahrer die Möglichkeit gegeben wird, die Schaltstrategie enger auf seine Bedürfnisse abzustimmen.

Ausgehend von einem Verfahren der eingangs näher genannten Art erfolgt die Lösung dieser Aufgabe mit den im Anspruch 1 angegebenen Merkmalen; vorteilhafte Ausgestaltungen sind in den Unteransprüchen beschrieben.

Die Erfindung sieht also vor, dass zur Anpassung an einen anderen Fahrertyp mit einem anderen Fahrstil die für die Fahrertypbewertung verwendeten Bewertungsparameter durch den Fahrer verändert werden, wobei die dafür erforderlichen Daten über ein Dateneingabegerät und eine Schnittstelle an der Getriebeelektronik in diese eingegeben werden.

Erfindungsgemäß ist vorgesehen, dass durch ein bestimmtes Eingabegerät, z. B. die Radiotastatur, der Fahrer ausgewählte Parameter der adaptiven Fahrstrategie für die Fahrertypbewertung verändern kann. Damit ist es möglich, die zeitliche Abhängigkeit bei einem Wechsel von einem Fahrertyp zu einem anderen Fahrertyp zu verändern. Außerdem kann der Fahrer das Schaltverhalten des Getriebes bezogen auf einen bestimmten Fahrertyp verändern, z. B. durch Verzögerungszeiten, Offsets und Faktoren. Dieses führt zu einer erhöhten Kundenzufriedenheit, obwohl nur eine beschränkte Anzahl von Parametern veränderbar ist, damit Gefahrensituationen sicher vermieden werden können.

Um die adaptive Fahrstrategie zu verändern, müssen bestimmte Parameter zur Verfügung gestellt werden. Die Fahrertypbewertung hat eine zentrale Bedeutung für die adaptive Fahrstrategie. Sie beinhaltet verschiedene Bewertungsfunktionen, wie die Längsbeschleunigungsbewertung, die Querbeschleunigungsbewertung, die Anfahrbewertung und die Kick-down-Bewertung. Die Veränderung der Parameter für die Fahrertypbewertung kann insbesondere durch ein Beaufschlagen der Fahraktivität (d. h. den Bewertungszähler) oder der Beiträge der einzelnen Bewertungsfunktionen mit einem Offset oder einem Faktor erfolgen. Damit wird die Zuordnung von Fahraktivität zu definiertem abgespeicherten Fahrertyp verändert. Eine andere Möglichkeit besteht in einer Veränderung der Filterparameter für das Hoch- und Herunterlernen der Fahraktivität oder der Beiträge der einzelnen Bewertungsfunktionen. Damit wird das dynamische Verhalten der Fahrertypbewertung verändert.

Die Erkennung einer Kurve kann ebenfalls durch einen Faktor oder einen Offset früher oder später erfolgen. Nach der Kurve kann durch einen Faktor die Kurvenerkennung früher oder später verlassen werden.

Bei einem spontanen Freigeben des Gaspedals kann eine Hochschaltverhinderung ausgelöst werden. Das Auslösen kann durch einen verstellbaren Parameter veränderbar sein. Das Verlassen dieser Hochschaltverhinderung kann bedarfsweise durch einen Faktor verändert werden.

Ebenfalls kann bei einem schnellen Niederdrücken des Gaspedals die Fahraktivität spontan erhöht werden, indem der Bewertungszähler erhöht wird, wodurch gegebenenfalls eine Rückschaltung ausgelöst wird. Das Auslösen kann durch einen verstellbaren Parameter verändert werden.

Das Rücksetzen der Fahraktivität wird z. B. durch eine Verzögerungszeit gesteuert. Ein Faktor als verstellbarer Parameter kann die Verzögerungszeit verändern.

Bei einer spontanen Verzögerung des Fahrzeugs durch schnelles Abbremsen können Zwangsrückschaltungen und Hochschaltverhinderung ausgelöst werden. Dieses Auslösen kann abhängig von einem verstellbaren Parameter erfolgen. Ebenso kann das Verlassen der Hochschaltverhinderung durch einen verstellbaren Faktor an den Fahrerwunsch angepaßt werden.

Die Veränderung dieser Parameter erfolgt durch den Fahrer. Hierzu ist von der Getriebeelektronik eine Schnittstelle zur Verfügung zu stellen, die mit einem Eingabegerät verbunden ist, über die die Signale zur Parameterveränderung in die Getriebeelektronik eingegeben werden. Das Eingabegerät kann z. B. die Radioanlage sein. Der Fahrer gibt eine bestimmte Codenummer über die Radiotastatur ein und verändert somit die ausgewählten Parameter der adaptiven Fahrstrategie.

Ebenso ist es möglich, über beschreibbare CD-ROMs, über Disketten, über einen Laptop, der z. B. mit dem Navigationssystem kommuniziert oder über einen CD-Player sowie die Memory-Funktion der Sitzverstellung die Parameter zu verändern. Ein PC-Programm kann mittels komfortabler Menüs zur Veränderung der Parameter eingesetzt werden.

Des weiteren ist es möglich, über eine persönliche Transponder-Karte, die den Zugang zum Fahrzeug ermöglicht, entsprechende fahrerbezogene Schaltstrategie vorzuwählen.

## Patentansprüche

1. Verfahren zur Veränderung einer definierten adaptiven Fahrstrategie, die in einer Getriebeelektronik für ein Automatgetriebe eines Kraftfahrzeuges abgespeichert ist als Funktion einer Vielzahl von Parametern, die einen bestimmten Fahrertyp und seinen Fahrstil, sowie das Kraftfahrzeug und seine Fahrt charakterisieren, wobei zur Anpassung der adaptiven Fahrstrategie an einen anderen Fahrer mit einem anderen Fahrstil die für die Fahrertypbewertung verwendeten Parameter durch diesen anderen Fahrer verändert werden, **dadurch gekennzeichnet, daß** ausgewählte Bewertungsparameter der adaptiven Fahrstrategie für die Fahrertypbewertung durch Dateneingabe durch den anderen Fahrer verändert werden, wobei die dafür erforderlichen Daten von dem anderen Fahrer über ein Dateneingabegerät und eine Schnittstelle an der Getriebeelektronik in diese eingegeben werden.

2. Verfahren nach Anspruch 1, **dadurch gekennzeichnet, daß** der veränderbare BewertungsParameter ein Parameter zur Bewertung einer Längsbeschleunigung ist.

3. Verfahren nach Anspruch 1, **dadurch gekennzeichnet, daß** der veränderbare Bewertungsparameter ein Parameter zur Bewertung einer Querbeschleunigung ist.

4. Verfahren nach Anspruch 1, **dadurch gekennzeichnet, daß** der veränderbare Bewertungsparameter ein Parameter zur Bewertung eines Anfahrens des Kraftfahrzeugs ist.

5. Verfahren nach Anspruch 1, **dadurch gekennzeichnet, daß** der veränderbare Bewertungsparameter ein Parameter zur Bewertung eines Kick-downs ist.

6. Verfahren nach Anspruch 1, **dadurch gekennzeichnet, daß** der veränderbare Bewertungsparameter ein Filterparameter für ein Hoch- und Herunterlernen der Fahraktivität ist.

7. Verfahren nach Anspruch 1, **dadurch gekennzeichnet, daß** der veränderbare Bewertungsparameter ein Filterparameter für die Beiträge der einzelnen Bewertungen der Parameter ist, die einen bestimmten Fahrertyp und seinen Fahrstil, sowie das Kraftfahrzeug und seine Fahrt charakterisieren.

8. Verfahren nach Anspruch 1, **dadurch gekennzeichnet, daß** der veränderbare Bewertungsparameter ein Parameter für die Bewertung einer Kurvenerkennung ist.

9. Verfahren nach Anspruch 1, **dadurch gekennzeichnet, daß** der veränderbare Bewertungsparameter ein Parameter ist, der spontanes Freigeben des Gaspedals zum Verhindern eines Hochschaltung bewertet.

10. Verfahren nach Anspruch 1, **dadurch gekennzeichnet, daß** der veränderbare Bewertungsparameter ein Parameter ist, der spontane Verzögerung des Kraftfahrzeugs zur Auslösung einer Zwangsrückschaltung bewertet.

11. Verfahren nach Anspruch 1, **dadurch gekennzeichnet, daß** der veränderbare Bewertungsparameter ein Parameter ist, der schnelles Niederdrücken des Gaspedals zur Erhöhung der Fahraktivität bewertet.

12. Verfahren nach Anspruch 11, **dadurch gekennzeichnet, daß** die Fahraktivität durch eine Erhöhung des Bewertungszählers erhöht wird.

13. Verfahren nach einem oder mehreren der Ansprüche 1 bis 12, **dadurch gekennzeichnet, daß** die Veränderung der Bewertungsparameter durch eine Beaufschlagung mit Verzögerungszeiten erfolgt.

14. Verfahren nach einem oder mehreren der Ansprüche 1 bis 12, **dadurch gekennzeichnet, daß** die Veränderung der Bewertungsparameter durch eine Beaufschlagung mit Offsets erfolgt.

15. Verfahren nach einem oder mehreren der Ansprüche 1 bis 12, **dadurch gekennzeichnet, daß** die Veränderung der Bewertungsparameter durch Faktoren erfolgt.

16. Verfahren nach einem der vorhergehenden Ansprüche, **dadurch gekennzeichnet, daß** als Dateneingabegerät eine eingebaute Radioanlage verwendet wird.

17. Verfahren nach Anspruch 16, **dadurch gekennzeichnet, daß** die Eingabe der Daten in die Radioanlage über deren Tastatur erfolgt.

18. Verfahren nach Anspruch 16, **dadurch gekennzeichnet, daß** die Eingabe der Daten in die Radioanlage über ein CD-Laufwerk erfolgt.

19. Verfahren nach Anspruch 16, **dadurch gekennzeichnet, daß** die Eingabe der Daten in die Radioanlage über ein Cassettenlaufwerk erfolgt.

20. Verfahren nach einem oder mehreren der vorhergehenden Ansprüche, **dadurch gekennzeichnet, daß** als Dateneingabegerät ein eingebautes Navigationssystem verwendet wird.

21. Verfahren nach Anspruch 20, **dadurch gekennzeichnet, daß** die Eingabe über einen mit dem Navigationssystem kommunizierenden tragbaren Computer erfolgt.

22. Verfahren nach einem oder mehreren der vorhergehenden Ansprüche, **dadurch gekennzeichnet, daß** als Dateneingabegerät eine Diagnosetaste des Kraftfahrzeugs verwendet wird.

23. Verfahren nach einem oder mehreren der vorhergehenden Ansprüche, **dadurch gekennzeichnet, daß** als Dateneingabegerät Memory-Tasten für eine Sitzverstellung des Kraftfahrzeugs verwendet werden.

24. Verfahren nach einem oder mehreren der vorhergehenden Ansprüche, **dadurch gekennzeichnet, daß** als Dateneingabegerät eine persönliche Transponderkarte verwendet wird, die der zweite Fahrer mit sich führt.

## Claims

1. Method for changing a defined adaptive driving strategy, which is stored as a function of a multitude of parameters in the transmission electronics of an automatic motor-vehicle transmission and characterizes a particular type of driver and the driving style as well as the vehicle and the trip, with the parameters for the type of driver being changed by the other driver for adaptation of the adaptive driving strategy to the other driver and driving style, **characterized in that** selected driver type assessment parameters of the adaptive driving strategy are changed by data entries made by the other driver, with the data being entered into the transmission electronics by the other driver via a data input device and an interface on the transmission electronics.

2. Method according to claim 1, **characterized in that** the alterable assessment parameter is a parameter for assessing longitudinal acceleration.

3. Method according to claim 1, **characterized in that** the alterable assessment parameter is a parameter for assessing transversal acceleration.

4. Method according to claim 1, **characterized in that** the alterable assessment parameter is a parameter for assessing driveaway of the motor vehicle.

5. Method according to claim 1, **characterized in that** the alterable assessment parameter is a parameter for assessing kickdown.

6. Method according to claim 1, **characterized in that** the alterable assessment parameter is a filter parameter for upleaming and downlearning of the driving activity.

7. Method according to claim 1, **characterized in that** the alterable assessment parameter is a filter parameter for the individual assessments of the parameters which characterize a particular type of driver and driving style as well as the motor vehicle and the trip.

8. Method according to claim 1, **characterized in that** the alterable assessment parameter is a parameter for assessing curve detection.

9. Method according to claim 1, **characterized in that** the alterable assessment parameter is a parameter for assessing spontaneous release of the gas pedal for prevention of an upshift.

10. Method according to claim 1, **characterized in that** the alterable assessment parameter is a parameter for assessing spontaneous vehicle deceleration for activation of a kickdown (forced downshift).

11. Method according to claim 1, **characterized in that** the alterable assessment parameter is a parameter for assessing quick depressing of the gas pedal for increased driving activity.

12. Method according to claim 1, **characterized in that** driving activity is raised by a higher assessment count.

13. Method according to one or several of the claims 1 through 12, **characterized in that** alteration of the assessment parameters is effected through addition of delay times.

14. Method according to one or several of the claims 1 through 12, **characterized in that** alteration of the assessment parameters is effected through addition of offsets.

15. Method according to one or several of the claims 1 through 12, **characterized in that** alteration of the assessment parameters is effected through factors.

16. Method according to one of the preceding claims, **characterized in that** an integrated radio system is used for data input.

17. Method according to claim 16, **characterized in that** entry of the data into the radio system is effected by means of its keyboard.

18. Method according to claim 16, **characterized in that** entry of the data into the radio system is effected via a CD drive.

19. Method according to claim 16, **characterized in that** entry of the data into the radio system is effected via a cassette drive.

20. Method according to one or several of the preceding claims, **characterized in that** an integrated navigation system is used for data input.

21. Method according to claim 20, **characterized in that** data entry is effected by means of a portable computer which communicates with the navigation system.

22. Method according to one or several of the preceding claims, **characterized in that** a diagnosis button of the motor vehicle is used for data entry.

23. Method according to one or several of the preceding claims, **characterized in that** memory buttons for seat adjustment are used for data entry.

24. Method according to one or several of the preceding claims, **characterized in that** a personal transponder key of the second driver is used for data entry.

## Revendications

1. Procédé pour modifier une stratégie de conduite adaptative définie qui est enregistrée dans une électronique de boîte de vitesses utilisée pour une boîte de vitesses automatique d'un véhicule automobile, sous la forme d'une fonction d'une pluralité de paramètres qui caractérisent un certain type de conducteur et son style de conduite, ainsi que le véhicule automobile et sa marche, dans lequel, pour adapter la stratégie de conduite adaptative à un autre conducteur possédant un autre style de conduite, les paramètres utilisés pour l'interprétation du type du conducteur sont modifiés par cet autre conducteur, **caractérisé en ce que** certains paramètres sélectionnés parmi les paramètres d'interprétation de la stratégie de conduite adaptative pour l'interprétation du type de conducteur sont modifiés par une entrée de données exécutée par l'autre conducteur, les données nécessaires pour cela étant entrées dans l'électronique de boîte de vitesses par l'autre conducteur par l'intermédiaire d'un appareil d'entrée de données et d'une interface de cette électronique de boîte de vitesses.

2. Procédé selon la revendication 1, **caractérisé en ce que** le paramètre d'interprétation pouvant être modifié est un paramètre pour l'interprétation d'une accélération longitudinale.

3. Procédé selon la revendication 1, **caractérisé en ce que** le paramètre d'interprétation pouvant être modifié est un paramètre pour l'interprétation d'une accélération transversale.

4. Procédé selon la revendication 1, **caractérisé en ce que** le paramètre d'interprétation pouvant être modifié est un paramètre pour l'interprétation d'un démarrage du véhicule automobile.

5. Procédé selon la revendication 1, **caractérisé en ce que** le paramètre d'interprétation pouvant être modifié est un paramètre pour l'interprétation d'un kick-down.

6. Procédé selon la revendication 1, **caractérisé en ce que** le paramètre d'interprétation pouvant être modifié est un paramètre de filtrage pour une adaptation ascendante ou descendante de l'activité de conduite.

7. Procédé selon la revendication 1, **caractérisé en ce que** le paramètre d'interprétation pouvant être modifié est un paramètre de filtrage pour les contributions des interprétations individuelles des paramètres qui caractérisent un certain type de conducteur et son style de conduite ainsi que le véhicule automobile et sa marche.

8. Procédé selon la revendication 1, **caractérisé en ce que** le paramètre d'interprétation pouvant être modifié est un paramètre pour l'interprétation d'une détection de virage.

9. Procédé selon la revendication 1, **caractérisé en ce que** le paramètre d'interprétation pouvant être modifié est un paramètre qui évalue le relâchement spontané de la pédale d'accélérateur pour empêcher un changement de rapport en montée.

10. Procédé selon la revendication 1, **caractérisé en ce que** le paramètre d'interprétation pouvant être modifié est un paramètre qui interprète une décélération spontanée du véhicule automobile pour déclencher une rétrogradation forcée.

11. Procédé selon la revendication 1, **caractérisé en ce que** le paramètre d'interprétation pouvant être modifié est un paramètre qui interprète un enfoncement rapide de la pédale d'accélérateur pour élever l'activité de conduite.

12. Procédé selon la revendication 11, **caractérisé en ce que** l'activité de conduite est élevée par un avancement du compteur d'interprétations.

13. Procédé selon l'une ou plusieurs des revendications 1 à 12, **caractérisé en ce que** la modification des paramètres d'interprétation s'effectue par une attaque comportant des temps de temporisation.

14. Procédé selon l'une ou plusieurs des revendications 1 à 12, **caractérisé en ce que** la modification des paramètres d'interprétation s'effectue par une attaque comportant des décalages.

15. Procédé selon l'une ou plusieurs des revendications 1 à 12, **caractérisé en ce que** la modification des paramètres d'interprétation s'effectue par des facteurs.

16. Procédé selon l'une des revendications précédentes, **caractérisé en ce qu'**on utilise comme appareil d'entrée de données une installation radio incorporée.

17. Procédé selon la revendication 16, **caractérisé en ce que** l'entrée des données dans l'installation radio s'effectue par l'intermédiaire d'un clavier.

18. Procédé selon la revendication 16, **caractérisé en ce que** l'entrée des données dans l'installation radio s'effectue par l'intermédiaire d'un lecteur cédéroms.

19. Procédé selon la revendication 16, **caractérisé en ce que** l'entrée des données dans l'installation radio s'effectue par l'intermédiaire d'un lecteur de cassettes.

20. Procédé selon l'une ou plusieurs des revendications précédentes, **caractérisé en ce qu'**il utilise comme appareil d'entrée de données un système de navigation incorporé.

21. Procédé selon la revendication 20, **caractérisé en ce que** l'entrée s'effectue par l'intermédiaire d'un ordinateur portable qui communique avec le système de navigation.

22. Procédé selon l'une ou plusieurs des revendications précédentes, **caractérisé en ce qu'**il utilise comme appareil d'entrée de données une touche de diagnostic du véhicule automobile.

23. Procédé selon l'une ou plusieurs des revendications précédentes, **caractérisé en ce qu'**il utilise comme appareil d'entrée de données les touches de mémoire pour un réglage de siège du véhicule automobile.

24. Procédé selon l'une ou plusieurs des revendications précédentes, **caractérisé en ce qu'**il utilise comme appareil d'entrée de données une carte transpondeur personnelle que le second conducteur porte sur lui.
